(19) Europäisches Patentamt / European Patent Office / Office européen des brevets

(11) **EP 4 512 673 A1**

(12) **EUROPEAN PATENT APPLICATION**

(43) Date of publication:
26.02.2025  Bulletin 2025/09

(21) Application number: 23192972.0

(22) Date of filing: 23.08.2023

(51) International Patent Classification (IPC):
*B60T 8/17* (2006.01)        *B60T 8/172* (2006.01)
*B60T 17/22* (2006.01)

(52) Cooperative Patent Classification (CPC):
**B60T 17/228; B60T 8/1705; B60T 8/172;**
B60T 2270/402; B60T 2270/413

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Dellner Bubenzer AB**
**781 70 Borlänge (SE)**

(72) Inventors:
• **PRIM, Viktor**
**811 61 SANDVIKEN (SE)**
• **CARLGREN, Mattias**
**791 61 FALUN (SE)**

(74) Representative: **Brann AB**
**P.O. Box 3690**
**Sveavägen 63**
**103 59 Stockholm (SE)**

(54) **CONTROLLER FOR CONTROLLING RAIL VEHICLE BRAKE UNITS, COMPUTER-IMPLEMENTED METHOD THEREFOR, COMPUTER PROGRAM AND NON-VOLATILE DATA CARRIER**

(57) A controller (140) receives a brake command (B), and in response thereto controls electrically operated brake units to apply respective brake forces to respective rotating members (111, 112, 113, 114) being mechanically linked to the wheels (121a, 121b, 122a, 122b, 123a, 123b, 124a, 124b) of a rail vehicle (100) to reduce its speed. The controller (140) repeatedly checks if each brake unit fulfills an operability criterion and is faultless (OK), or does not fulfil the operability criterion and is faulty (F). The controller (140) also repeatedly determines an adhesion parameter reflecting a friction coefficient between at least one wheel (121a, 121b) and at least one rail (191, 192) upon which the rail vehicle (100) travels; estimates, based on the adhesion parameter, if it is possible to increase a respective brake force of each of the faultless (OK) brake units (172, 173, 174) to compensate for any faulty (F) brake units (171), and if so, in response to the brake command (B), controls the faultless (OK) brake units to apply a respective brake force to the respective rotating members, which respective brake force is increased to compensate for any faulty brake units.

EP 4 512 673 A1

Fig. 5

**Description**

TECHNICAL FIELD

The present invention relates generally to retardation of rail vehicles. Especially, the invention relates to a controller for controlling the brake units of a rail vehicle according to the preamble of claim 1. The invention also relates to a corresponding computer-implemented method, a computer program and a non-volatile data carrier storing such a computer program.

BACKGROUND

For obvious reasons, failing rail vehicle brakes may have catastrophic consequences. However, in practice, a smaller number of faulty brake units need not be very dramatic. Namely, the brake capacity of a rail vehicle is normally oversized, inter alia to handle such types of fail situations.

Today, if a brake unit fails, the onboard safety and monitoring system notifies the train driver about the problem, and the resulting reduced braking capacity. Based on the fact that the braking capacity has been reduced, the train engineer needs to calculate an updated braking capacity, an updated maximum speed for the rail vehicle and manually adjust values for a total brake force attainable, both with respect to the onboard watching systems and the traffic control systems. This is a time-consuming process, which is susceptible to human factor-related errors. Due to various safety considerations and margins, inter alia stipulated by infrastructure related factors, the process also often leads to a brake performance being more restrictive than actually needed. Consequently, the existing strategies for handling brake failures provide too coarse results and cause capacity losses in terms of throughput in the railway network.

US 6,520,599 describes a pneumatic system serving as a backup to the electronic system that normally provides load compensation on a railcar truck during both service and emergency applications of the brakes. The pneumatic system compensates for the load railcar bears during service and emergency brake applications whenever the electronic load compensation system fails due to a loss of power or other electrical failure. The system is ideal for railcar trucks equipped with brake pipe controlled brake equipment. The pneumatic system provides load compensation through use of a four-port variable load valve in combination with a low complexity MC-30A-1 control valve.

US 6,062,657 discloses a system and method for providing braking to a vehicle having at least two brake sets intended to deliver braking forces for a decelerating rate in response to a braking force request wherein each brake set has surplus braking available. In the event one brake set fails or becomes unavailable, then the surplus available in the other braking set may be utilized to satisfy this deficit, thereby providing the requested braking rate to the vehicle.

US 7,597,408 reveals a method for compensating a regenerative braking amount when regenerative braking of a vehicle fails due to an error in controller area network (CAN) communications between an electronic brake system (EBS) and a hybrid control unit (HCU). The method includes steps of determining whether or not the regenerative braking is activated, remembering a regenerative braking control amount in the HCU and the EBS, learning and remembering a difference between the regenerative braking control amount in a normal state calculated just before the failure and the braking amount for the failure check in the HCU and the EBS, compensating the braking amount for the failure check with the difference value between the normal regenerative braking control amount and the braking amount for the failure check, and performing a regenerative braking control in the HCU and the EBS respectively.

EP 3 554 904 shows an intelligent locomotive brake control system which selects and optimizes use of dynamic, independent, and automatic brakes on the locomotive to assure intended brake power, to minimize in-train forces, minimize brake component wear, and to automate standard train brake protocol. The system may be programmed to alter an automatic brake application commanded by a train driver to omit or reduce the amount of the automatic brake application in favor of a dynamic brake application, and independent brake application, or combination thereof.

Thus different strategies are known for handling various kinds of brake failures in rail vehicles. However, there is yet no satisfying solution, which, on one hand, automatically compensates for the unavailability of a subset of brakes; and, on the other hand, uses the available brakes to their full potential under the prevailing conditions.

SUMMARY

The object of the present invention is to solve the above problem and offer a solution that enables the working brakes of a rail vehicle to be employed in an optimal manner.

According to one aspect of the invention, the object is achieved by a controller for controlling a set of electrically operated brake units of a rail vehicle. The controller is configured to receive a brake command, for example over a data bus, and in response thereto, control the brake units to apply respective brake forces to respective rotating members being mechanically linked to the wheels of the rail vehicle so as to reduce its speed. The controller is also configured to repeatedly check, for each of the brake units, if the brake unit fulfills an operability criterion and is considered to be faultless, or does not fulfil the operability criterion and is considered to be faulty. Moreover, the controller is configured to repeatedly determine an adhesion parameter reflecting a friction coefficient between at least one of said wheels and at least one rail upon which the rail vehicle travels. Based on the adhesion parameter, in turn, the controller is configured to estimate if it is possible to increase a respective brake force of each of the faultless brake units to compensate for any faulty brake units in the set of brake units. If such an increase is estimated to be possible, in response to the brake command, the controller is configured to control the faultless brake units to apply a respective brake force to the respective rotating members, which respective brake force is increased to compensate for any faulty brake units.

The above controller is advantageous because it allows the rail vehicle's brakes to be operated as efficiently as possible given their capacity and the prevailing adhesion conditions. As a result, the rail vehicle may continue to be operated without the need for any corrective measures even if a smaller number of brake units malfunction. Preferably, of course, the malfunctioning brake units should be repaired at the earliest convenient opportunity to restore full operability of the rail vehicle.

According to one embodiment of this aspect of the invention, in response to the brake command, the controller is configured to control the faultless brake units to apply the respective increased brake force to compensate for any faulty brake units until whichever of the following events that occurs first: (i) a subsequent check reveals that at least one additional brake unit of said brake units is considered to be faulty, or (ii) it is estimated that for a subsequently determined adhesion parameter it is not possible to increase the respective brake force of each of the faultless brake units to compensate for any faulty brake units. Namely, in the former case, it must be checked if the faultless brake units are deemed capable to compensate for the faulty brake units; and in the latter case the brake capacity must be reassessed.

According to another embodiment of this aspect of the invention, if the subsequent check reveals that at least one additional brake unit of said brake units is considered faulty, the controller is configured to estimate, based on the adhesion parameter, if it is possible to further increase a respective brake force of each of the faultless brake units to compensate also for the at least one additional faulty brake unit. If such further increase is estimated to be possible, in response to the brake command, the controller is configured to control the faultless brake units to apply a respective brake force to the respective rotating members, which respective brake force is increased to compensate also for the additional faulty brake unit(s). Consequently, the rail vehicle's braking capacity may be automatically adapted to accommodate also for further brake unit failures in a convenient manner.

According to yet another embodiment of this aspect of the invention, if it is estimated that for the subsequently determined adhesion parameter it is not possible to increase the respective brake force of each of the faultless brake units to compensate for any faulty brake units, the controller is configured to recalculate a braking capacity for the rail vehicle. The recalculated braking capacity is here based on the faultless brake units and the adhesion parameter. Hence, if the faultless brake units cannot compensate for the faulty brake units, the braking capacity is automatically updated to the brake capacity that is possible to attain given the prevailing adhesion conditions. Preferably, in connection with this, the controller is further configured to emit an alarm signal, for example informing the train driver of the updated braking capacity.

According to still another embodiment of this aspect of the invention, the controller is configured to estimate if it is possible to increase a respective brake force of each of the faultless brake units to compensate for any faulty brake units on the further basis of a total weight of the rail vehicle. Preferably, here, the total weight represents the total dynamic weight that takes the instantaneous kinetic energy of the rail vehicle into account.

For best performance, it is preferable that the total weight is estimated as accurately as possible. To this aim, according to one embodiment of this aspect of the invention, the controller is configured to estimate the total weight of the rail vehicle based on a power signal indicating an amount of power produced by a set of drive units in the rail vehicle when accelerating the rail vehicle from a first speed to a second speed, and a speed signal indicating respective values of the first and second speeds. Namely, the power and speed signals form a basis for calculating an accurate measure of the rail vehicle's current total weight.

According to another embodiment of this aspect of the invention, the controller is configured to determine the adhesion parameter as follows: (a) obtaining wheel speed signals indicating respective rotational speeds of the wheel axles in a driving subset of wheel axles of the rail vehicle; (b) controlling a specific drive unit in a set of drive units to produce an acceleration control signal such that this drive unit applies a gradually increasing traction force to a specific wheel axle of the wheel axles in the driving subset of the wheel axles; (c) determining, repeatedly, during production of the acceleration control signal, an absolute difference between the rotational speed of the specific wheel axle and an average rotational speed of the wheel axles in the driving subset of the wheel axles except the specific wheel axle; and in response to the absolute difference exceeding a threshold value (d) determine the adhesion parameter. This iterative and gradually increased stressing of the wheel-to-rail interface renders it possible to examine the specific conditions that determine the adhesion parameter in a precise and thorough manner.

According to a further embodiment of this aspect of the invention, it is presumed that the rail vehicle has in total m brake units. Moreover, if the brake command instructs a total brake force of xm to be applied to all of the rotating members, and if n of the brake units are faulty, the controller is configured to control each of the m-n faultless brake units to apply a respective brake force of x(n+1)/n to each of the rotating members. In other words, the brake load is evenly distributed over the faultless brake units. As a ground rule, this is a reasonable approach. However, for best efficiency it may be generally advantageous to distribute a somewhat higher brake load on the brake units located in the front part of the rail vehicle than on the brake units located in the rear part of the rail vehicle.

According to another aspect of the invention, the object is achieved by a computer-implemented method for controlling a set of electrically operated brake units in a rail vehicle, which method is performed in processing unit of a controller of the rail vehicle. The method involves receiving a brake command, and in response thereto, controlling the brake units to apply respective brake forces to respective rotating members being mechanically linked to the wheels of the rail vehicle so as to reduce its speed. The method further involves checking, repeatedly, for each of the brake units, if the brake unit fulfills an operability criterion and is considered to be faultless, or does not fulfil the operability criterion and is considered to be faulty; determining, repeatedly, an adhesion parameter reflecting a friction coefficient between at least one wheel of said wheels and at least one rail upon which the rail vehicle travels; estimating, based on the adhesion parameter, if it is possible to increase a respective brake force of each of the faultless brake units to compensate for any faulty brake units; and if such an increase is estimated to be possible, in response to the brake command, controlling the faultless brake units to apply a respective brake force to the respective rotating members, which respective brake force is increased to compensate for any faulty brake units. The advantages of this method, as well as the preferred embodiments thereof are apparent from the discussion above with reference to the proposed controller.

According to a further aspect of the invention, the object is achieved by a computer program loadable into a non-volatile data carrier communicatively connected to a processing unit. The computer program includes software for executing the above method when the program is run on the processing unit.

According to another aspect of the invention, the object is achieved by a non-volatile data carrier containing the above computer program.

Further advantages, beneficial features and applications of the present invention will be apparent from the following description and the dependent claims.

BRIEF DESCRIPTION OF THE DRAWINGS

The invention is now to be explained more closely by means of preferred embodiments, which are disclosed as examples, and with reference to the attached drawings.

Figure 1    schematically illustrates a rail vehicle equipped with a controller according to one embodiment of the invention;

Figure 2    shows a schematic drive unit according to one embodiment of the invention;

Figure 3    shows a graph illustrating an example of the friction coefficient as a function of wheel slippage;

Figure 4    shows a block diagram of a controller according to one embodiment of the invention; and

Figure 5    illustrates, by means of a flow diagram, the method according to the invention and preferred embodiments thereof.

DETAILED DESCRIPTION

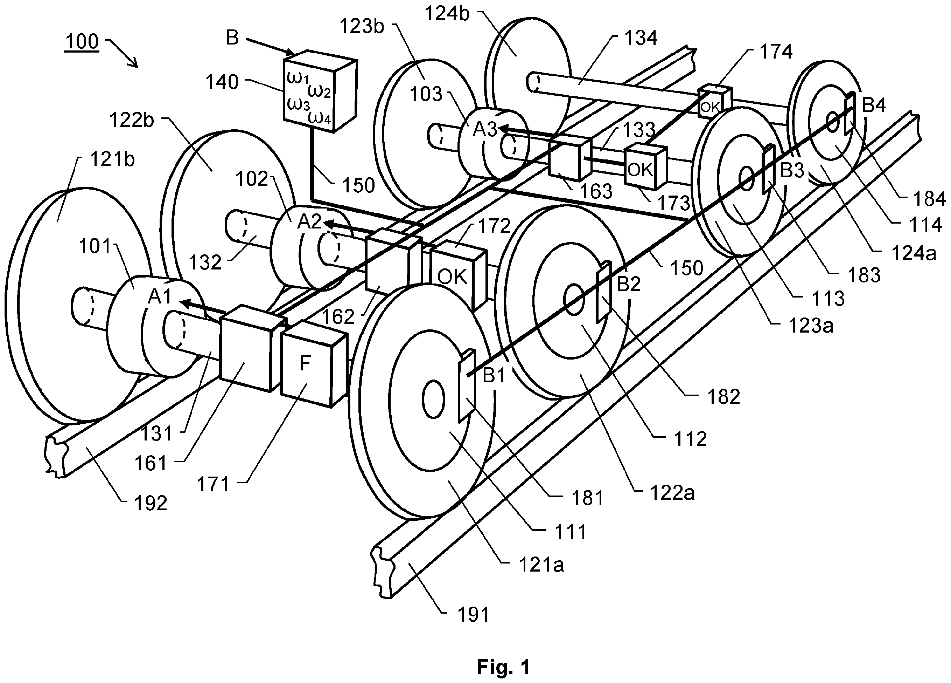

In Figure 1, we see a schematic illustration of a rail vehicle 100 equipped with a controller 140 according to one embodiment of the invention. The rail vehicle 100 may be any kind of rail bound vehicle, such as a locomotive, a freight car, a goods wagon, a passenger car/coach, a railcar/railbus, and/or any combination thereof.

The controller 140 is arranged to control a set of electrically operated brake units, here exemplified as 171, 172, 173 and 174 respectively, of the rail vehicle 100. To this aim, the controller 140 is configured to receive a brake command B, for example from a driver's cabin or an emergency functionality of the rail vehicle 100, which for example may be passenger-activated with a bypass option.

In response to the brake command B, the controller 140 is configured to control each of the brake units 171, 172, 173 and 174 to apply a respective brake force to a respective rotating member 111, 112, 113 and 114. The rotating members 111, 112, 113 and 114 respectively, in turn, are mechanically linked to the wheels of the rail vehicle 100. Here, the wheels are exemplified by 121a, 121b, 122a, 122b, 123a, 123b, 124a and 124b respectively. Either each pair of wheels is mounted on a common wheel axle, so that they both rotate together with the wheel axle; or each wheel is mounted on a separate wheel axle, so that it may rotate independently from any other wheel. In either case, the brake forces applied to the respective rotating members 111, 112, 113 and 114 cause the rail vehicle 100 to reduce its speed.

For each of the brake units 171, 172, 173 and 174 respectively, the controller 140 is also configured to repeatedly check whether the brake unit fulfills an operability criterion. For example, the operability criterion may specify that the brake unit is capable of producing a brake force above a threshold level. If the operability criterion is fulfilled, the brake unit is considered to be faultless OK. If, however, the operability criterion is not fulfilled, the brake unit is considered to be faulty F.

According to one embodiment of the invention, in response to the brake command B, the controller 140 is configured to control the faultless OK brake units, say 172, 173 and 174, to apply the respective increased brake force to compensate for the faulty F brake unit, say 171, until one or both of the below occurs:

- a subsequent check reveals that at least one additional brake unit in the set of brake units is considered to be faulty F, or
- it is estimated that, for a determined adhesion parameter $\mu m$, it is not possible to increase the respective brake force of each of the faultless OK brake units to compensate for any faulty F brake units.

Namely, in the former case, the controller 140 must check if the faultless OK brake units are deemed capable to compensate for the faulty F brake units; and in the latter case the brake capacity must be reassessed.

According to one embodiment of the invention, if the subsequent check reveals that at least one additional brake unit, say 172, is considered to be faulty F, the controller 140 is configured to estimate, based on the adhesion parameter $\mu m$, if it is possible to further increase a respective brake force of each of the faultless OK brake units, say 173 and 174, to compensate also for the at least one additional to be faulty F brake unit 172. If such a further increase is estimated to be possible, in response to the brake command B, the control unit 140 is configured to control the faultless OK brake units, 173 and 174, to apply a respective brake force to the respective rotating members, which respective brake force is increased to compensate also for the additional faulty F brake unit 172.

According to one embodiment of the invention, if the controller 140 estimates that for the subsequently determined adhesion parameter $\mu m$ it is not possible to increase the respective brake force of each of the faultless OK brake units 173 and 174 to compensate for the faulty F brake units 171 and 172, the controller 140 is further configured to recalculate a braking capacity for the rail vehicle 100. Here, the recalculated braking capacity is based on the faultless OK brake units and 174 and the adhesion parameter $\mu m$. Preferably, in such a case, i.e. if the braking capacity is recalculated, the controller 140 is also configured to emit an alarm signal A, for example informing the train driver of the updated braking capacity, for storage in a log file and/or for forwarding to a monitoring functionality in the rail vehicle and/or a central site. Moreover, the alarm signal A and/or the updated braking capacity may preferably be transmitted to a control mechanism, such as an automatic train protection (ATP) system, e.g. ETCS (European Train Control System).

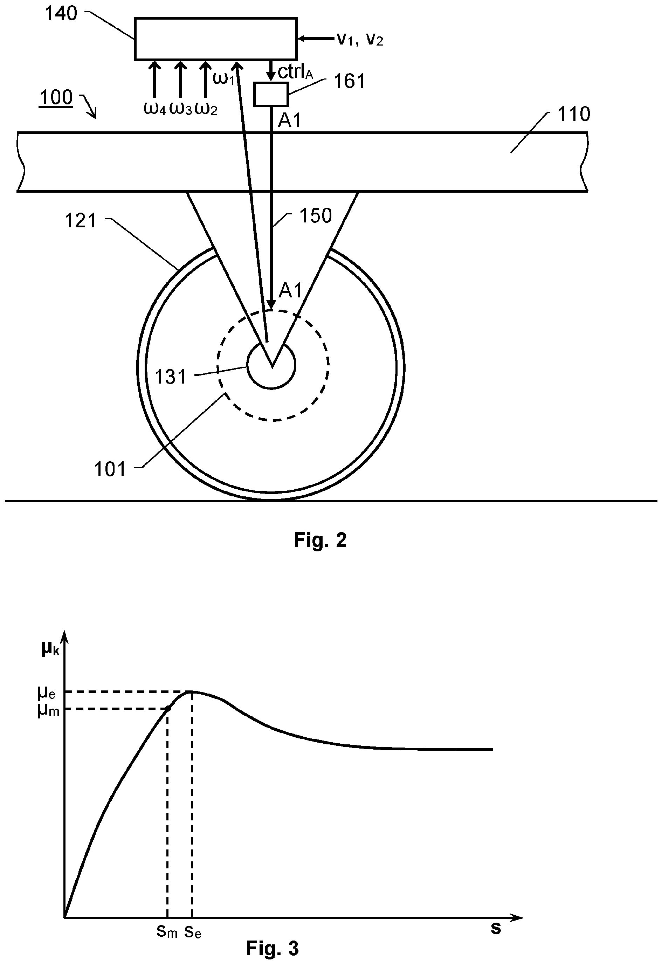

Referring now to Figure 3, which shows a graph over an example of how a kinetic friction coefficient $\mu_k$ may be expressed as a function of a wheel slippage s.

Here, the wheel slippage s is understood to either designate a spinning motion of a wheel relative to the rail or a sliding motion of the wheel relative to the rail. In other words, the wheel slippage s is applicable to an acceleration scenario as well as a retardation ditto.

Characteristically, for lower values, the kinetic friction coefficient $\mu_k$ increases relatively proportionally with increasing wheel slippage s. When approaching a peak value $\mu_e$, however, the kinetic friction coefficient $\mu_k$ levels out somewhat. After having passed the peak value, the kinetic friction coefficient $\mu_k$ is essentially constant for all values of the wheel slippage s. Thus, the friction coefficient peak value $\mu_e$ is associated with an optimal wheel slippage $s_e$ after which a further increase of wheel slippage s results in a gradually reduced, and then almost constant kinetic friction coefficient $\mu_k$.

According to the one embodiment of the invention, the controller 140 is configured to determine a parameter $\mu_m$ that reflects the friction coefficient between at least one of the rail vehicle's 100 wheels and at least one respective rail 191 and/or 192 upon which the rail vehicle 100 travels.

Ideally, the peak value $\mu_e$ should be derived. For example, an estimate of the peak value $\mu_e$ may be derived as follows. When an absolute difference $|\omega_1 - \omega_a|$ between the rotational speed of a specific driven wheel axle 131 and an average rotational speed $\omega_a$ of all the rail vehicle's 100 wheel axles in a driving subset of axles except the specific driven wheel axle 131 exceeds the threshold value, this corresponds to a situation where the wheels 121a and 121b on the specific driven wheel axle 131 experience a wheel slippage $s_m$ near the optimal wheel slippage $s_e$. The kinetic friction coefficient $\mu_k$ is given by the expression:

$$\mu_k = \frac{F}{m_{tot} \cdot g}$$

where F is the drive force applied by the drive unit, $m_{tot}$ is the overall weight of the rail vehicle 100, and g is the standard acceleration due to gravity.

Under the assumption that the wheel slippage $s_m$ is near the optimal wheel slippage $s_e$, the peak value $\mu_e$ of the kinetic friction coefficient $\mu_k$ may be estimated relatively accurately; and the proximity of wheel slippage $s_m$ to the optimal wheel slippage $s_e$ is ensured by said threshold value for the absolute difference $|\omega_1 - \omega_a|$ between the rotational speed of the specific driven wheel axle 131 and the average rotational speed $\omega_a$ of all the rail vehicle's 100 wheel axles except the specific driven wheel axle 131.

The adhesion parameter $\mu m$ thus reflects the friction coefficient $\mu e$ between at least one of the wheels, here 121a and 121b, and at least one of the rails 191 and 192 upon which the rail vehicle 100 travels.

Additionally, based on the adhesion parameter $\mu_m$, the controller 140 is configured to estimate if it is possible to increase a respective brake force of each of the faultless OK brake units, say 172, 173 and 174 respectively, to compensate for any faulty F brake unit, say 171. Moreover, if such an increase is estimated to be possible, in response to the brake command B, the controller 140 is configured to control the faultless OK brake units to apply a respective brake force to the respective rotating members, which respective brake force is increased to compensate for any faulty brake units.

According to one embodiment of the invention, the controller 140 is configured to estimate if it is possible to increase a respective brake force of each of the faultless OK brake units to compensate for the faulty F brake units on the basis of the total weight $m_{tot}$ of the rail vehicle 100. Therefore, the controller 140 may be configured to estimate the total current weight $m_{tot}$ of the rail vehicle 100, i.e. the dynamic weight, as will be described below. This means that the controller 140 takes into account the instantaneous kinetic energy of the rail vehicle 100, i.e. the calculations consider the gross weight of the rail vehicle 100 and a current load weight thereon.

For further enhanced brake control, it is also advantageous to know exactly how the rail vehicle's 100 weight is distributed over its wheel axles. Namely, only a comparatively low brake force can be applied to a relatively lightly loaded axle without risking that its wheels experience slippage against the rails, whereas a relatively heavily loaded axle may be subjected to a comparatively high brake force before its wheels experience slippage against the rails. Both for efficiency reasons and to avoid material damage, wheel slippage shall be avoided whenever possible. Therefore, to be on the safe side, according to the known practice, an estimated lowest axle weight typically determines the maximum allowed brake force for the entire rail vehicle. Of course, this results in an overall suboptimal acceleration/braking performance.

Consequently, the controller 140 is preferably arranged to estimate the different axle weights of the rail vehicle 100. Figure 1 exemplifies four such wheel axles in the form of 131, 132, 133 and 134 respectively. In response to acceleration control signals A1, A3 and A3 from acceleration controllers 161, 162 and 163, a set of drive units 101, 102 and 103 is configured to apply a respective traction force to each wheel axle in a driving subset of the wheel axles 131, 132 and 133, such that the rail vehicle 100 accelerates.

In practice, a typical rail vehicle contains a substantially larger number of wheel axles than what is illustrated in Figure 1. Traditionally, each bogie has two wheel axles carrying altogether four wheels, and each car body of the rail vehicle 100 includes a respective bogie in the front and rear ends.

In Figure 1, the rail vehicle 100 contains a set of drive units 101, 102 and 103 respectively configured to apply a respective traction force to each of the wheel axles 131, 132 and 133 in the driving subset of the wheel axles.

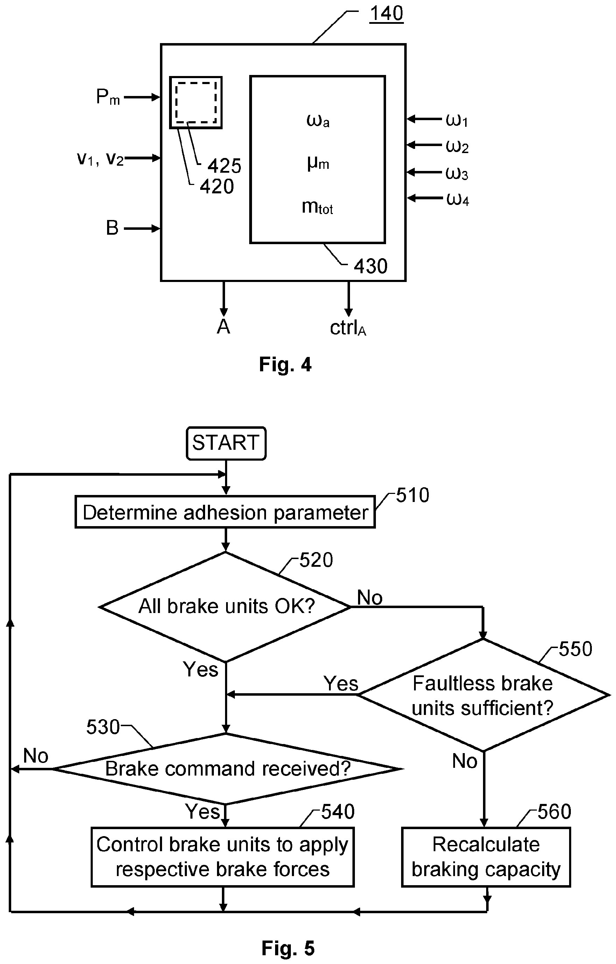

Referring now to Figure 4, the controller 140 is configured to obtain a power signal $P_m$ indicating an amount of power being produced by the set of drive units 101, 102 and 103 when accelerating the rail vehicle 100 from a first speed $v_1$ to a second speed $v_2$, for example from a standstill to 10 km/h. Of course, however, according to the invention, the power signal $P_m$ may equally well be received during acceleration of the rail vehicle 100 between any other two speed levels. In any case, the controller 140 is configured to obtain a speed signal indicating respective values of the first and second speeds $v_1$ and $v_2$.

Based on the power signal $P_m$ and the values of the first and second speeds $v_1$ and $v_2$, the controller 140 is configured to estimate an overall weight $m_{tot}$ of the rail vehicle 100. This may be done under the assumption that any losses in the motor and losses due to wind and rolling resistance are negligible, which is basically true for low speeds. Namely, under this assumption, all the supplied power is converted into kinetic energy of the rail vehicle, i.e. $P \cdot t = W_k$, where P is the supplied power, t is the time during which the power has been supplied and $W_k$ is the resulting kinetic energy.

The resulting kinetic energy $W_k$, in turn, may be expressed as:

$$W_k = m_{tot} \cdot v^2/2, \text{ where } v = v_2 - v_1.$$

In other words, the controller 140 may calculate the overall weight $m_{tot}$ of the rail vehicle 100 as:

$$m_{tot} = \frac{(v_2 - v_1)^2}{2P \cdot t}$$

Referring now also to Figure 2, the controller 140 is further configured to:

(a) obtain wheel speed signals indicating respective rotational speeds $\omega_1$, $\omega_2$ and $\omega_3$ of the wheel axles 131, 132 and 133 respectively in the driving subset of wheel axles,

(b) produce an acceleration control signal A1 to a specific drive unit 101 in the set of drive units such that this drive unit 101 applies a gradually increasing traction force to a specific driven wheel axle in the set of driving wheel axles, here exemplified by 131,

(c) determine, repeatedly during production of the acceleration control signal A1, an absolute difference $|\omega_1 - \omega_a|$ between the rotational speed $\omega_1$ of the specific driven wheel axle 131 and an average rotational speed $\omega_a$ of all the wheel axles in the driving subset of the wheel axles except the specific driven wheel axle, i.e. here 132 and 133, and in response to the absolute difference $|\omega_1 - \omega_a|$ exceeding a threshold value

(d) determine a parameter $\mu_m$ reflecting a friction coefficient $\mu_e$ between a pair of wheels 121a and 121b respectively on the specific wheel axle 131 and a pair of rails 191 and 192 upon which the rail vehicle 100 travels.

Finally, the controller 140 is configured to repeat the above steps (a) to (c) for each wheel axle 131, 132 and 133 in the driving subset, and based thereon estimate a respective fraction $m_1$, $m_2$ and $m_3$ of the overall weight $m_{tot}$ carried by each of these wheel axles.

It is worth mentioning that the above-mentioned specific driven wheel axle 131 does not need to be any particular wheel axle, e.g. a frontmost or a rearmost wheel axle of the rail vehicle 100. On the contrary, the above procedure may start with an arbitrary selected wheel axle in the driving subset.

Moreover, it is generally advantageous to execute the above procedure in line with a schedule, fixed or dynamic, wherein each wheel axle in the driving subset alternately either represents the specific wheel axle or is included in the complement set, i.e. all the wheel axles except the specific wheel axle. Repeated execution of procedure is nevertheless beneficial to enable adjustment of the braking functionality in response to any changes in the overall weight $m_{tot}$ and/or a redistribution of the overall weight $m_{tot}$ over the wheel axles during operation of the rail vehicle 100.

As exemplified by the wheel axle 134 in Figure 1, one or more of the rail vehicle's 100 wheel axles may be non-driven, i.e. not be comprised in the driving subset of the wheel axles 131, 132 and 133. To handle this case and thus enable estimation of the axle weights of the non-driven axles, according to one embodiment of the invention, the controller 140 is further configured execute the below procedure.

(e) Obtain wheel speed signals indicating respective rotational speeds $\omega_1$, $\omega_2$, $\omega_3$ and $\omega_4$ of each rail vehicle's 100 wheel axles 131, 132, 133 and 134 respectively;

(f) produce a brake control signal B4, for example over a data bus 150, to a brake unit 184 configured to apply a brake force to the non-driven wheel axle 134 such that this brake unit applies a gradually increasing brake force to the non-driven wheel axle 134;

(g) determine, repeatedly during production of the brake control signal B4, an absolute difference $|\omega_4 - \omega_a|$ between the rotational speed $\omega_4$ of the non-driven wheel axle 134 and an average rotational speed $\omega_a$ of all the wheel axles 131, 132 and 133 except the non-driven wheel axle 134; and in response to the absolute difference exceeding a threshold value, preferably however not necessarily the same threshold value as referred to above in relation to Figure 3

(h) determine a parameter $\mu_m$ reflecting a friction coefficient $\mu_e$ between a pair of wheels 124a and 124b on the specific wheel axle 134 and a pair of rails 191 and 192 upon which the rail vehicle 100 travels,

In the general case where the rail vehicle has more than one non-driven axle, the controller 140 is further configured to repeat steps (e) to (g) for each of the non-driven wheel axles, and based thereon estimate a respective fraction $m_4$ of the overall weight $m_{tot}$ carried by each of the non-driven wheel axles.

The controller 140 may be configured to generate a control message $ctrl_A$ to make the acceleration controllers 161, 162 and 162 produce acceleration control signals A1, A2 and A3 to the drive units 101, 102 and 103 respectively, such that an average drive force applied to the wheel axles 132, and 133 except the specific wheel axles 131 is gradually *decreased* when the drive force applied to the specific wheel axle 131 is gradually *increased*. In other words, the driving on the other wheel axles 132 and 133 compensate for the somewhat excessive drive force applied to the specific wheel axle 131.

Preferably, this compensation is temporally matched. This means that the controller 140 is configured to generate the control message $ctrl_A$ to cause the acceleration controllers 161, 162 and 162 to produce acceleration control signals A1, A2 and A3 to the drive units 101, 102 and 103 such that, at each point in time, the gradual decrease of the average drive force applied to the wheel axles 132 and 133 except the specific wheel axles 131 corresponds to the gradual increase of the drive force applied to the specific wheel axle 131. Namely, thereby the deviating drive force applied to specific wheel axle 131 is masked by the opposite deviation represented by the drive force applied to the wheel axles 132 and 133 in the driving subset.

Referring again to Figure 2, we see a drive unit 101 according to one embodiment of the invention. The drive unit 101 is configured to receive the acceleration control signal A1 from the acceleration controller 161, which, in turn, operates in response to the control message $ctrl_A$ from the controller 140. The acceleration control signal A1 may for example be transmitted via the data bus 150. In response to the acceleration control signal A1, the drive unit 101 is configured to drive the wheel axle 131. The drive unit 101 may contain at least one electric motor whose generated traction force depends on a magnitude of an electric current fed to it.

Figure 4 shows a block diagram of the controller 140 according to one embodiment of the invention. The controller 140 includes processing circuitry in the form of at least one processor 430 and a memory unit 420, i.e. non-volatile data carrier, storing a computer program 425, which, in turn, contains software for making the at least one processor 430 execute the actions mentioned in this disclosure when the computer program 425 is run on the at least one processor 430.

The controller 140 contains input interfaces configured to receive the brake command B, the power signal $P_m$, the speed signal expressing the speeds $v_1$ and $v_2$ respectively and the wheel speed signals $\omega_1$, $\omega_2$, $\omega_3$ and $\omega_4$ indicating the rotational speeds of the wheel axles in a driving subset of wheel axles 131, 132, 133 and 134 respectively. Further, the controller 140 contains an output interface configured to provide the control signal $ctrl_A$ to enable the acceleration controllers to cause its associated drive unit 101, 102 and 103 respectively to produce a respective traction force in response to the acceleration control signals A1, A2 and A3. Here, the respective traction force are based on the respective fraction $m_1$, $m_2$ or $m_3$ of the overall weight $m_{tot}$ applicable to the wheel axle in question 131, 132 or 133 respectively.

Additionally, controller 140 contains an output interface configured to provide the alarm signal A if the braking capacity is recalculated because it has been determined that the faultless OK brake units cannot to compensate for the faulty F brake units.

In order to sum up, and with reference to the flow diagram in Figure 5, we will now describe the computer-implemented method for a rail vehicle that is carried out by the controller 140 according to the invention and preferred embodiments thereof.

In a first step 510, an adhesion parameter $\mu m$ is determined, which reflects a friction coefficient $\mu e$ between at least one wheel of the rail vehicle and at least one rail upon which the rail vehicle travels.

A step 520 thereafter checks if all the brake units fulfills an operability criterion. If so, a step 530 follows; and otherwise, the procedure continues to a step 550.

Step 530 checks if a brake command has been received. If so, s step 540 follows; and otherwise, the procedure loops back to step 510.

In step 540, the faultless brake units are controlled to apply a respective brake force to respective rotating members being mechanically linked to the rail vehicle's wheels so as to reduce the rail vehicle's speed according to the received brake command.

Step 550 estimates, based on the adhesion parameter $\mu m$, if it is possible to increase a respective brake force of each of the faultless brake units to compensate for the faulty brake units. If such compensation is deemed to be possible, step 530 follows; and otherwise the procedure continues to a step 560.

In step 560, a braking capacity for the rail vehicle is recalculated based on the faultless brake units and the adhesion parameter $\mu m$. Thereafter, the procedure loops back to step 510.

All of the process steps, as well as any subsequence of steps, described with reference to Figure 5 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

Variations to the disclosed embodiments can be understood and effected by those skilled in the art in practicing the claimed invention, from a study of the drawings, the disclosure, and the appended claims. The invention is not restricted to the described embodiments in the figures, but may be varied freely within the scope of the claims.

**Claims**

1. A controller (140) for controlling the brake units (171, 172, 173, 174) of a rail vehicle (100), which controller is configured to:

    receive a brake command (B), and in response thereto,
    control the brake units to apply respective brake forces to respective rotating members (111, 112, 113, 114) being mechanically linked to the wheels (121a, 121b, 122a, 122b, 123a, 123b, 124a, 124b) of the rail vehicle so as to reduce its speed, and
    check, repeatedly, for each of the brake units (171, 172, 173, 174), if the brake unit fulfills an operability criterion and is considered to be faultless (OK), or does not fulfil the operability criterion and is considered to be faulty (F),

    **characterized in that** the brake units (171, 172, 173, 174) are electrically operated, and the controller (140) is configured to:

    determine, repeatedly, an adhesion parameter ($\mu$m) reflecting a friction coefficient ($\mu$e) between at least one of said wheels (121a, 121b) and at least one rail (191, 192) upon which the rail vehicle (100) travels,
    estimate, based on the adhesion parameter ($\mu$m), if it is possible to increase a respective brake force of each of the faultless (OK) brake units (172, 173, 174) to compensate for any faulty (F) brake units (171), and if such an increase is estimated to be possible, in response to the brake command (B)
    control the faultless (OK) brake units to apply a respective brake force to the respective rotating members, which respective brake force is increased to compensate for any faulty brake units.

2. The controller (140) according to claim 1, wherein, in response to the brake command (B), the controller is configured to control the faultless (OK) brake units to apply the respective increased brake force to compensate for any faulty (F) brake units until whichever of the following occurs first:

    a subsequent check reveals that at least one additional brake unit of said brake units is considered to be faulty (F), or
    it is estimated that for a subsequently determined adhesion parameter ($\mu$m) it is not possible to increase the respective brake force of each of the faultless (OK) brake units to compensate for any faulty (F) brake units.

3. The controller (140) according to claim 2, wherein, if the subsequent check reveals that at least one additional brake unit of said brake units is considered faulty (F), the controller is configured to:

    estimate, based on the adhesion parameter ($\mu$m), if it is possible to further increase a respective brake force of each of the faultless (OK) brake units to compensate also for the at least one additional faulty (F) brake unit, and if such a further increase is estimated to be possible, in response to the brake command (B)
    control the faultless (OK) brake units to apply a respective brake force to the respective rotating members, which respective brake force is increased to compensate also for the additional faulty (F) brake units.

4. The controller (140) according to any of claims 2 or 3, wherein, if it is estimated that for the subsequently determined adhesion parameter ($\mu$m) it is not possible to increase the respective brake force of each of the faultless (OK) brake units to compensate for any faulty (F) brake units, the controller is configured to: recalculate a braking capacity for the rail vehicle (100), which recalculated braking capacity is based on the faultless (OK) brake units and the adhesion parameter ($\mu$m).

5. The controller (140) according to claim 4, wherein, if the braking capacity is recalculated, the controller is further configured to emit an alarm signal (A).

6. The controller (140) according to any of the preceding claims, wherein the controller is configured to estimate if it is possible to increase a respective brake force of each of the faultless (OK) brake units to compensate for any faulty (F) brake units on the further basis of a total weight ($m_{tot}$) of the rail vehicle (100).

7. The controller (140) according to claim 6, wherein the controller is configured to estimate the total weight ($m_{tot}$) of the rail vehicle (100) based on:

    a power signal ($P_m$) indicating an amount of power produced by a set of drive units (101, 102, 103) in the rail vehicle when accelerating the rail vehicle from a first speed ($v_1$) to a second speed ($v_2$), and
    a speed signal indicating respective values of the first and second speeds ($v_1$, $v_2$).

8. The controller (140) according to any of the preceding claims, wherein the controller is configured to:

    (a) obtain wheel speed signals indicating respective rotational speeds ($\omega_1$, $\omega_2$, $\omega_3$) of the

wheel axles in a driving subset of wheel axles (131, 132, 133) of the rail vehicle (100),

(b) control a specific drive unit (101) in a set of drive units to produce an acceleration control signal (A1) such that this drive unit applies a gradually increasing traction force to a specific wheel axle (131) of the wheel axles in the driving subset of the wheel axles (131, 132, 133),

(c) determine, repeatedly, during production of the acceleration control signal (A1), an absolute difference ($|\omega_1 - \omega_a|$) between the rotational speed of the specific wheel axle (131) and an average rotational speed ($\omega_a$) of the wheel axles (132, 133) in the driving subset of the wheel axles except the specific wheel axle; and in response to the absolute difference ($|\omega_1 - \omega_a|$) exceeding a threshold value

(d) determine the adhesion parameter ($\mu_m$).

9. The controller (140) according to any of the preceding claims, wherein the rail vehicle (100) comprises in total m brake units, and if the brake command (B) instructs a total brake force of xm to be applied to all of the rotating members, and n of the brake units are faulty (F), the controller is configured to:

control each of the m-n faultless brake units to apply a respective brake force of x(n+1)/n to each of the rotating members.

10. A computer-implemented method for controlling the brake units (171, 172, 173, 174) of a rail vehicle (100), which method is performed in processing unit (101) of a controller (100), and which method comprises:

receiving a brake command (B), and in response thereto,

controlling the brake units to apply respective brake forces to respective rotating members (111, 112, 113, 114) being mechanically linked to the wheels (121a, 121b, 122a, 122b, 123a, 123b, 124a, 124b) of the rail vehicle (100) so as to reduce its speed, and

checking, repeatedly, for each of the brake units, if the brake unit fulfills an operability criterion and is considered to be faultless (OK), or does not fulfil the operability criterion and is considered to be faulty (F),

**characterized by**:

determining, repeatedly, an adhesion parameter ($\mu_m$) reflecting a friction coefficient ($\mu_e$) between at least one wheel (121a, 121b) of said wheels and at least one rail (191, 192) upon which the rail vehicle (100) travels,

estimating, based on the adhesion parameter ($\mu_m$), if it is possible to increase a respective brake force of each of the faultless (OK) brake units to compensate for any faulty (F) brake units, and if such an increase is estimated to be possible, in response to the brake command (B)

controlling the faultless (OK) brake units to apply a respective brake force to the respective rotating members, which respective brake force is increased to compensate for any faulty (F) brake units.

11. The method according to claim 10, wherein, in response to the brake command (B), the method comprises controlling the faultless (OK) brake units to apply the respective increased brake force to compensate for any faulty (F) brake units until whichever of the following occurs first:

a subsequent check reveals that at least one additional brake unit of said brake units is considered to be faulty (F), or

it is estimated that for a subsequently determined adhesion parameter ($\mu$m) it is not possible to increase the respective brake force of each of the faultless (OK) brake units to compensate for any faulty (F) brake units.

12. The method according to claim 11, wherein, if the subsequent check reveals that at least one additional brake unit of said brake units is considered faulty (F), the method comprises:

estimating, based on the adhesion parameter ($\mu$m), if it is possible to further increase a respective brake force of each of the faultless (OK) brake units to compensate for also for the at least one additional faulty (F) brake unit, and if such a further increase is estimated to be possible, in response to the brake command (B) controlling the faultless (OK) brake units to apply a respective brake force to the respective rotating members, which respective brake force is increased to compensate also for the additional faulty (F) brake units.

13. The method according to any of claims 11 or 12, wherein, if it is estimated that for the subsequently determined adhesion parameter ($\mu$m) it is not possible to increase the respective brake force of each of the faultless (OK) brake units to compensate for any faulty (F) brake units, the method comprises:
recalculating a braking capacity for the rail vehicle (100), which recalculated braking capacity is based on the faultless (OK) brake units and the adhesion parameter ($\mu$m).

14. The method according to claim 13, wherein, if the braking capacity is recalculated, the further comprises:
emitting an alarm signal (A).

**15.** The method according to any of claims 10 to 14, comprising estimating if it is possible to increase a respective brake force of each of the faultless (OK) brake units to compensate for any faulty (F) brake units on the further basis of a total weight ($m_{tot}$) of the rail vehicle (100).

**16.** The method according to claim 15, comprising estimating the total weight ($m_{tot}$) of the rail vehicle (100) based on:

a power signal ($P_m$) indicating an amount of power produced by a set of drive units (101, 102, 103) in the rail vehicle when accelerating the rail vehicle from a first speed ($v_1$) to a second speed ($v_2$), and
a speed signal indicating respective values of the first and second speeds ($v_1$, $v_2$).

**17.** The method according to any of claims 10 to 16, comprising:

(a) obtaining wheel speed signals indicating respective rotational speeds ($\omega_1$, $\omega_2$, $\omega_3$) of the wheel axles in a driving subset of wheel axles (131, 132, 133) of the rail vehicle (100),
(b) controlling a specific drive unit (101) in a set of drive units to produce an acceleration control signal (A1) such that this drive unit applies a gradually increasing traction force to a specific wheel axle (131) of the wheel axles in the driving subset of the wheel axles (131, 132, 133),
(c) determining, repeatedly during production of the acceleration control signal (A1), an absolute difference ($|\omega_1 - \omega_a|$) between the rotational speed of the specific wheel axle (131) and an average rotational speed ($\omega_a$) of the wheel axles (132, 133) in the driving subset of the wheel axles except the specific wheel axle;
and in response to the absolute difference ($|\omega_1 - \omega_a|$) exceeding a threshold value
(d) determining the adhesion parameter ($\mu_m$).

**18.** The method according to any of claims 10 to 17, wherein the rail vehicle comprises in total m brake units, and if the brake command instructs a total brake force of xm to be applied to all of the rotating members, and n of the brake units are faulty (F), the method comprises:
controlling each of the m-n faultless brake units to apply a respective brake force of x(n+1)/n to the rotating members.

**19.** A computer program (425) loadable into a non-volatile data carrier (420) communicatively connected to at least one processor (430), the computer program (425) comprising software for executing the method according any of the claims 10 to 18 when the computer program (425) is run on the at least one processor (430).

**20.** A non-volatile data carrier (420) containing the computer program (425) of the claim 19.

**Fig. 1**

**Fig. 2**

**Fig. 3**

**Fig. 4**

**Fig. 5**

Europäisches
Patentamt

European
Patent Office

Office européen
des brevets

# EUROPEAN SEARCH REPORT

Application Number

**EP 23 19 2972**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/057095 A1 (HAC ALEKSANDER B [US]) 17 March 2005 (2005-03-17) | 1,9,10, 18-20 | INV. B60T8/17 |
| Y | * paragraphs [0033] - [0035], [0037], [0038], [0042], [0053], [0060], | 6-8, 15-17 | B60T8/172 B60T17/22 |
| A | [0061], [0064], [0070], [0074]; figures 2a,2b,10,11 * | 2-5, 11-14 | |
| | ----- | | |
| Y,D | US 6 520 599 B2 (WESTINGHOUSE AIR BRAKE TECH CORP [US]) 18 February 2003 (2003-02-18) * the whole document * | 6,7,15, 16 | |
| | ----- | | |
| Y | US 6 549 842 B1 (HAC ALEKSANDER BOGUSLAW [US] ET AL) 15 April 2003 (2003-04-15) * the whole document * | 8,17 | |
| | ----- | | |

| | |
|---|---|
| | TECHNICAL FIELDS SEARCHED (IPC) |
| | **B60T** |

The present search report has been drawn up for all claims

| Place of search | Date of completion of the search | Examiner |
|---|---|---|
| Munich | 31 January 2024 | Hernandez-Gallegos |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 23 19 2972**

This annex lists the patent family members relating to the patent documents cited in the above-mentioned European search report.
The members are as contained in the European Patent Office EDP file on
The European Patent Office is in no way liable for these particulars which are merely given for the purpose of information.

**31-01-2024**

| Patent document cited in search report | Publication date | Patent family member(s) | Publication date |
|---|---|---|---|
| US 2005057095 A1 | 17-03-2005 | NONE | |
| US 6520599 B2 | 18-02-2003 | AU 781054 B2 | 05-05-2005 |
| | | CA 2381372 A1 | 05-11-2002 |
| | | DE 60200340 T2 | 17-03-2005 |
| | | EP 1270353 A2 | 02-01-2003 |
| | | MX PA02004457 A | 16-07-2004 |
| | | US 2002163248 A1 | 07-11-2002 |
| | | ZA 200203271 B | 03-12-2002 |
| US 6549842 B1 | 15-04-2003 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6520599 B
- US 6062657 A
- US 7597408 B
- EP 3554904 A